# EUROPEAN PATENT SPECIFICATION

(11) **EP 3 302 781 B1**
(45) Date of publication and mention of the grant of the patent: **16.09.2020**
(21) Application number: 16728855.4
(22) Date of filing: 25.05.2016
(51) Int. Cl.: B01J 13/04

(54) **SPRAY DRYING**
SPRÜHTROCKNUNG
SÉCHAGE PAR PULVÉRISATION

(30) Priority: 29.05.2015 US 201562168381 P
(43) Date of publication of application: 11.04.2018
(73) Proprietor: Givaudan S.A., 1214 Vernier (CH)
(72) Inventor: GUISINGER, Robert, Beavercreek, Ohio 45440 (US); MCKEE, Mary Amanda, Cincinnati, Ohio 45208 (US); PEARL, Theodore T., Harrison, Ohio 45030 (US); WORKS, James R., Cold Spring, Kentucky 41076 (US)
(74) Representative: Global Patents
(86) International application number: PCT/EP2016/061800
(87) International publication number: WO 2016/193096

(56) References cited:
- US-A1- 2011 250 264
- US-A1- 2014 079 747
- MORTAZA AGHBASHLO ET AL: "Optimization of emulsification procedure for mutual maximizing the encapsulation and exergy efficiencies of fish oil microencapsulation", POWDER TECHNOLOGY, ELSEVIER SEQUOIA, LAUSANNE, CH, vol. 225, 24 March 2012 (2012-03-24), pages 107-117, XP028489368, ISSN: 0032-5910, DOI: 10.1016/J.POWTEC.2012.03.040 [retrieved on 2012-04-16]
- A.M. BORREGUERO ET AL: "Synthesis and characterization of microcapsules containing Rubitherm RT27 obtained by spray drying", CHEMICAL ENGINEERING JOURNAL, vol. 166, no. 1, 1 January 2011 (2011-01-01), pages 384-390, XP055292903, CH ISSN: 1385-8947, DOI: 10.1016/j.cej.2010.10.055
- KRZYSZTOF CAL ET AL: "Spray drying technique. I: Hardware and process parameters", JOURNAL OF PHARMACEUTICAL SCIENCES, vol. 99, no. 2, 22 September 2009 (2009-09-22), pages 575-586, XP055197056, WASHINGTON, US ISSN: 0022-3549, DOI: 10.1002/jps.21886
- WEIDNER ET AL: "High pressure micronization for food applications", JOURNAL OF SUPERCRITICAL FLUIDS, PRA PRESS, US, vol. 47, no. 3, 1 January 2009 (2009-01-01), pages 556-565, XP025914999, ISSN: 0896-8446, DOI: 10.1016/J.SUPFLU.2008.11.009 [retrieved on 2008-11-25]
- estefaniacc: "Spray drying of an emulsion using a Mini Spray-Drier Buchi B-290", YouTube, 25 May 2012 (2012-05-25), pages 1-1, XP054976705, Retrieved from the Internet: URL:https://www.youtube.com/watch?v=sK1UbV veBK8 [retrieved on 2016-08-03]
- Karin Nordström Dyvelkov ET AL: "New Advances in Spray-Drying Processes" In: "Microencapsulation in the Food Industry", 1 January 2014 (2014-01-01), Elsevier, XP055677288, ISBN: 978-0-12-404568-2 pages 57-63, DOI: 10.1016/B978-0-12-404568-2.00006-6,

## Description

This disclosure relates to a method of spray drying core-shell microcapsules.

Core-shell microcapsules, that is, microcapsules that comprise a single liquid core surrounded by a continuous polymeric shell, are well known and widely used, and have been used to encapsulate all types of materials, for example, pharmaceuticals, agrochemicals, flavors, fragrances and chemical components requiring separation from other chemical components in the same mixture, such as hardeners for adhesives and crosslinking agents for polymers.

There is a variety of ways of making such core-shell microcapsules, for example, coacervation (the dispersion of the liquid or solid material to be encapsulated in a solution of shell polymer and then causing the polymer to come out of solution and form a shell on the dispersed particles). Another method is to drop individual particles of liquid core material into a gelling bath, in which the shell instantly forms on the particle. The result of all of these processes is an aqueous slurry of core-shell microcapsules.

Mortaza Aghbashlo et al., in Powder Technology, 2012, 225, 107-117 discloses the production of microcapsules from a 2-fluid internal mixing nozzle located in the chamber roof centre, atomized with compressed air. The microcapsules are sprayed from the top of the heated drying chamber while the capsules are continuously removed via two exits, the second being a cyclone separator.

US 2014/079747 A1 discloses a pressurized working fluid delivered into a drying chamber, whereby the chamber is heated. The spraying occurs at the top end, with a two-stage collection while a cyclone removal occurs. Microcapsules are produced.

A.M Borreguero et al., in Chemical Engineering Journal, 2011, 166, 384-390 discloses a pressurized working fluid delivered into a drying chamber, whereby the chamber is heated. The spraying occurs at the top end, with a two stage collection while a cyclone removal occurs. Microcapsules are produced. Since a Büchi-290 spray-dried was used, a first and second stage removal is considered to be present.

Krzysztof Cal et al., in Journal of Pharmaceutical Sciences, 2009, 99, 575-586, discloses an air-droplet contact system comprising an air drying inlet (1), an atomizing device (2), an air outlet (3) and a dry powder uptake (4). The publication does disclose rotary valves on page 583, but these valves are disclosed in the context of particle collection whereby the dried particles have been transported to a suitable collection container and are not connected to the lower part of the heated chamber.

It is often desired that the microcapsules be recovered from this slurry in dry form. This has been difficult to achieve without massive breakage of capsules. One well-known way of drying is spray drying, in which a liquid is sprayed into a heated chamber. This is also well known as a method of preparing encapsulated substances, by spraying both substance and encapsulating material together into the heated chamber, the result being microparticles containing multiple occlusions of encapsulated substance. However, pre-formed core-shell microcapsules, particularly of larger sizes, are often too fragile to withstand this treatment, and a substantial loss of encapsulated material and a low yield of dried microcapsules is the general result.

It has now been found that it is possible to dry core-shell microcapsules by using a spray drying technique, which does not involve the substantial loss of microcapsules, as defined by claim 1. There is therefore provided a method of preparing dry core-shell microcapsules from an aqueous dispersion of such capsules, comprising spraying the dispersion through a two-fluid air-liquid nozzle into a heated chamber having an upper part and a lower part, the spraying taking place in the upper part and the lower part being provided with a means of continuous capsule removal.

By "two-fluid air-liquid nozzle" is meant a spray nozzle in which the liquid to be sprayed (the dispersion of capsules in this case) enters and leaves the nozzle through a central channel, while air under pressure enters the nozzle through a series of passages placed concentrically around the central channel and meeting the central channel just before it exits into the upper part of the heated chamber. Such nozzles are readily available commercially.

The chamber into which the aqueous dispersion of capsules is sprayed is similar to the chambers used in conventional spray drying equipment. The heat may be provided by heated air entering the chamber through vents located in the upper part of the chamber.

At the lower part of the chamber is located a means of continuously removing dried capsules from the chamber. This constant removal is important, as capsules have then reduced chances of being damaged because of prolonged exposure to elevated temperature. There are a number of readily-available means for doing this, selected from rotary valves, double-flap valves and cycle valves.

In a particular embodiment, the capsules are removed in two stages. This has the advantage of a higher yield of capsules. It also minimizes the explosion hazard inherent in a large body of fine, dry powder.

In a typical arrangement, the means of continuous capsule removal from the heated chamber is the first stage of removal and this is augmented with a second removal stage. This typically takes the form of a conventional cyclone separator equipped with a further means of continuous capsule removal. The various parameters of the components of the system are arranged such that most of the capsules are recovered from the heated chamber into which the dispersion is sprayed, and the remainder is recovered from the second stage. The use of this double recovery system raises the proportion of possible capsule recovery from a typical 80-90% in a single recovery stage to nearly 100%.

The method can be carried out using standard, commercially-available equipment. It is easy, efficient, reliable and safe in use, and delivers a high quality product with a minimum of capsule loss.

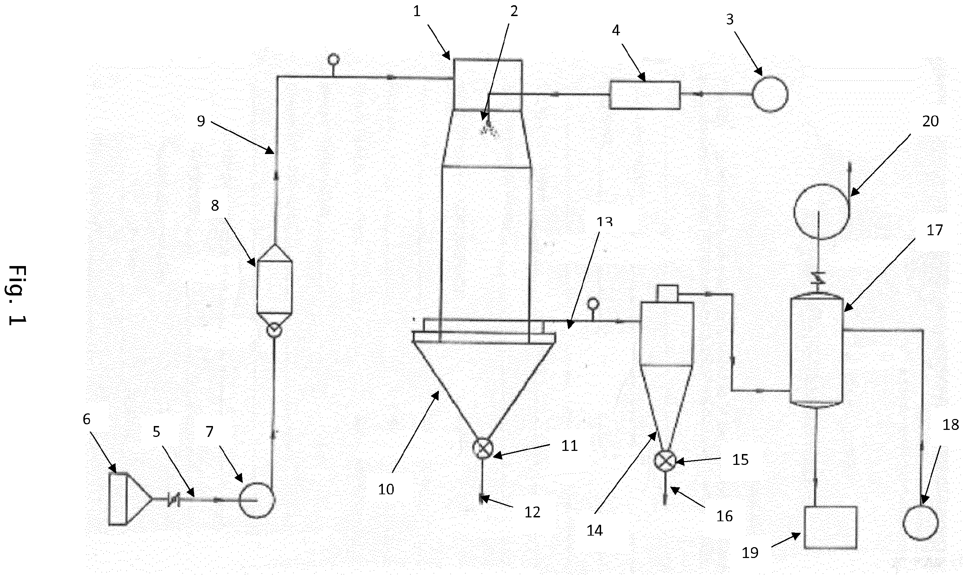

The disclosure is further described with reference to the accompanying drawing, which depicts a particular embodiment and which is not to be considered to be in any way limiting.

A drying chamber generally indicated as 1 is supplied with capsules through a spray head 2 from a feed tank 3 by means of a pump 4. The chamber is supplied with heated drying air through a line 5, the air being drawn through a filter 6 by a fan 7 and then passed on to a heater 8 before entering the drying chamber 1 through a line 9. At the bottom of the drying chamber 1 is an inverted conical section 10 at the bottom of which is a rotary valve 11. This allows the removal of dried capsules continuously through line 12.

Any capsules not recovered through valve 11 are recovered by passing the heated air out of the drying chamber via line 13 to a cyclone separator 14 also equipped with a rotary valve 15. This allows capsules to be removed via line 16.

Potential pollutants are dealt with by means of a scrubber 17 which utilizes water from a tank 18 to clean the air from the cyclone separator. Waste water is collected in a holding tank 19 while cleaned air is exhausted to atmosphere by means of a fan 20.

## Claims

1. A method of preparing dry core-shell microcapsules from an aqueous dispersion of such capsules, comprising spraying the dispersion through a two-fluid air-liquid nozzle into a heated chamber having an upper part and a lower part, the spraying taking place in the upper part and the lower part being provided with a means of continuous capsule removal, selected from rotary valves, double-flap valves and cycle valves.

2. A method according to claim 1, in which the capsules are removed in two stages.

3. A method according to claim 2, in which the means of continuous capsule removal from the heated chamber comprises a first stage of removal.

4. A method according to claim 2, in which a second removal stage comprises a cyclone separator equipped with a further means of continuous capsule removal.

## Patentansprüche

1. Verfahren zur Herstellung von trockenen Core-Shell-Mikrokapseln aus einer wässrigen Dispersion solcher Kapseln, umfassend Sprühen der Dispersion durch eine Zwei-Fluid-Luft-Flüssigkeitsdüse in eine erhitzte Kammer mit einem oberen Teil und einem unteren Teil, wobei das Sprühen in dem oberen Teil erfolgt und der untere Teil mit einem aus Drehschiebern, Doppelklappenventilen und Taktventilen ausgewählten Mittel zur kontinuierlichen Kapselentnahme versehen ist.

2. Verfahren nach Anspruch 1, wobei die Kapseln in zwei Stufen entnommen werden.

3. Verfahren nach Anspruch 2, wobei das Mittel zur kontinuierlichen Kapselentnahme aus der erhitzten Kammer eine erste Entnahmestufe umfasst.

4. Verfahren nach Anspruch 2, wobei eine zweite Entnahmestufe einen Zyklonabscheider umfasst, der mit einem weiteren Mittel der kontinuierlichen Kapselentnahme ausgerüstet ist.

## Revendications

1. Procédé de préparation de microcapsules à noyau-enveloppe sèches à partir d'une dispersion aqueuse de telles capsules, comprenant la pulvérisation de la dispersion par une buse à deux fluides air-liquide dans une chambre chauffée ayant une partie supérieure et une partie inférieure, la pulvérisation se produisant dans la partie supérieure et la partie inférieure étant pourvue d'un moyen d'enlèvement en continu des capsules, choisi parmi des soupapes rotatives, des doubles clapets et des soupapes à cycle.

2. Procédé selon la revendication 1, dans lequel les capsules sont enlevées en deux stades.

3. Procédé selon la revendication 2, dans lequel le moyen d'enlèvement en continu des capsules de la chambre chauffée comprend un premier stade d'enlèvement.

4. Procédé selon la revendication 2, dans lequel un deuxième stade d'enlèvement comprend un séparateur à cyclone équipé d'un moyen supplémentaire d'enlèvement en continu des capsules.
